Europäisches Patentamt

European Patent Office

Office européen des brevets

(19)

(11) Veröffentlichungsnummer : **0 037 980**
**B1**

(12) **EUROPÄISCHE PATENTSCHRIFT**

(45) Veröffentlichungstag der Patentschrift :
**13.06.84**

(51) Int. Cl.³ : **F 21 S 5/00**

(21) Anmeldenummer : **81102512.1**

(22) Anmeldetag : **03.04.81**

(54) **Ringförmige Leuchtstofflampe mit integrierter Vorschalt- und Zündvorrichtung.**

(30) Priorität : **16.04.80 DE 3014640**

(43) Veröffentlichungstag der Anmeldung :
**21.10.81 Patentblatt 81/42**

(45) Bekanntmachung des Hinweises auf die Patenterteilung : **13.06.84 Patentblatt 84/24**

(84) Benannte Vertragsstaaten :
**AT BE CH DE FR GB IT LI SE**

(56) Entgegenhaltungen :
**FR-A- 985 192**
**US-A- 2 769 083**
**US-A- 4 109 303**
**US-A- 4 161 020**

(73) Patentinhaber : **Patent-Treuhand-Gesellschaft für elektrische Glühlampen mbH**
**Hellabrunner Strasse 1**
**D-8000 München 90 (DE)**

(72) Erfinder : **Witte, Dieter**
**Lewitstrasse 39**
**D-4000 Düsseldorf 11 (DE)**
Erfinder : **Jendrewski, Alfons**
**Rudolf-Wilke-Weg 12**
**D-8000 München 71 (DE)**
Erfinder : **Nadler, Gerhard, Dipl.-Ing.**
**Schönstrasse 13c**
**D-8000 München 90 (DE)**

**Beschreibung**

Die Erfindung betrifft eine ringförmige Leuchtstofflampe mit integrierter Vorschalt- und Zündvorrichtung sowie einem Sockel zum Anschluß an eine Versorgungsspannung, wobei die Vorschalt- und Zündvorrichtung in einem Gehäuse angeordnet ist, das sich innerhalb des von der ringförmigen Leuchtstofflampe gebildeten Raumes befindet, und der Sockel konzentrisch zu der Leuchtstofflampe an dem Gehäuse befestigt ist.

Derartige Leuchtstofflampen sind in verschiedenen Ausführungsformen bekannt. Konstruktionen, bei denen das Gehäuse auch die Leuchtstofflampe selbst umgibt — z. B. entsprechend der DE-A-28 19 550 — haben den Charakter einer Leuchte. Die dadurch vergrößerte Lampeneinheit ist für den Einsatz in vorhandene Leuchten zumeist ungeeignet.

Die in der US-A-2 697 777 beschriebene ringförmige Leuchtstofflampe weist ein innerhalb des von der Leuchtstofflampe gebildeten Raumes koaxial angeordnetes, ellipsoidförmiges Gehäuse für die Vorschalt- und Zündvorrichtung mit daran befestigtem Schraubsockel auf. Die Leuchtstofflampe liegt auf drahtförmigen Bügeln, die an dem Gehäuse befestigt sind. Diese Konstruktion läßt sich nur in stehender Brennlage betreiben.

In der US-A-4 109 303 ist eine Lampeneinheit mit einer oder mehrerer konzentrisch zueinander angeordneter ringförmiger Leuchtstofflampen beschrieben. Jede der Leuchtstofflampen ist von einer quadratischen Grundplatte aus lichtdurchlässigem Plastikmaterial gehalten, wobei deren vier Ecken clipartig um die Leuchtstofflampe gebogen sind. Das Vorschaltgerät ist innerhalb der kleinsten ringförmigen Leuchtstofflampe auf der Grundplatte befestigt. Der Schraubsockel ist auf der ebenen Rückseite der Grundplatte angeordnet. Die Lampeneinheit weist kein abgeschlossenes Gehäuse auf ; die Lampenverdrahtung ist frei sichtbar.

Aber auch andere Konstruktionen mit herkömmlichen, gesockelten ringförmigen Leuchtstofflampen, wie z. B. in den US-A-2 769 083 und US-A-4 161 020 beschrieben, sind mittels eines Adapters an Glühlampenfassungen betreibbar. Dabei liegt die auswechselbare Lampe in der US-A-2 769 083 auf vier gleichartigen, mit Clips versehenen Haltearmen. Auch hier ist die Brennlage stark eingeschränkt. Die elektrische Verbindung zwischen der Lampe und dem die Vorschalt- und Zündvorrichtung enthaltenden kugelförmigen Gehäuse ist durch ein sichtbares Kabel vorgenommen. Die Halterung der ebenfalls auswechselbaren Lampe bzw. Lampen in der US-A-4 161 020 erfolgt sockelseitig durch die Stiftfassung und an der gegenüberliegenden Lampenseite mittels Fingerpaaren oder einer Federklammer. Das nahezu den gesamten Innenraum der ringförmigen Leuchtstofflampe ausfüllende, den Starter und das induktive Vorschaltgerät ausfüllende blockförmige Gehäuse schattet einen großen Teil des von der Lampe emittierten Lichtes ab und weist ein relativ hohes Gewicht auf, weshalb diese Einheit für viele vorhandene Leuchten ungeeignet ist.

Die in der FR-A-985 192 beschriebene Lampe ist auf einer vier Kontakte aufweisenden Halteplatte befestigt. Eine Vorschalt- und Zündvorrichtung ist bei dieser Konstruktion nicht vorgesehen, weshalb ein direktes Betreiben an einer Glühlampenfassung nicht möglich ist.

Aufgabe der Erfindung ist es, eine hinsichtlich Gewicht und Handhabung leichte Kompaktlampe mit einer ringförmigen Leuchtstofflampe zu schaffen, die in vorhandenen Leuchten in beliebiger Brennlage betreibbar sein soll. Die Abschattung durch das Gehäuse soll dabei möglichst gering gehalten werden.

Diese Aufgabe wird bei einer ringförmigen Leuchtstofflampe mit den im Oberbegriff des Hauptanspruchs genannten Merkmalen dadurch gelöst, daß das Gehäuse aus zwei Gehäuseteilen besteht, von denen der erste Gehäuseteil ein länglicher, sich diametrisch zum ringförmigen Leuchtstofflampengefäß erstreckender Hohlkörper ist und der zweite Gehäuseteil konzentrisch zum ringförmigen Leuchtstofflampengefäß an den ersten Gehäuseteil angeformt ist, und der erste Gehäuseteil weiterhin aus zwei formschlüssig und unlösbar miteinander verbundenen Gehäuseschalen besteht, deren eine Enden die Enden des ringförmigen Leuchtstofflampengefäßes vollständig und deren andere Enden die den Enden des Leuchtstofflampengefäßes gegenüberliegende Gefäßwand mindestens teilweise umfangen. Die Längsachse des ersten Gehäuseteils liegt vorzugsweise auf der von der Querachse des Leuchtstofflampengefäßes gebildeten Ebene. Der erste Gehäuseteil weist eine Höhe auf, die dem Durchmesser des ringförmigen Leuchtstofflampengefäßes angepaßt ist, wobei dessen Querschnitt beliebige Formen, wie z. B. quadratisch, rechteckig, kreisförmig, elliptisch oder oval, annehmen kann. Auf diese Weise wird die durch das Gehäuse verursachte Abschattung auf einem sehr niedrigen Niveau gehalten.

Die Verbindung der beiden Gehäuseschalen ist aus Sicherheitsgründen unlösbar und kann auf verschiedene Weise erfolgen. Geeignet sind z. B. Schnapp-, Ultraschallschweiß-, Kleb-, Niet- oder insbesondere Preßverbindungen, wobei an eine der Gehäuseschalen angeformte konische Stifte in entsprechende, an die andere Gehäuseschale angeformte zylindrische Buchsen einen unlösbaren Preßsitz gewährleisten.

Die die Enden des ringförmigen Leuchtstofflampengefäßes umfangenden einen Enden des ersten Gehäuseteils sind mit Elementen, wie z. B. Stegen und/oder Stiften versehen, die an entsprechenden Teilen des Leuchtstofflampengefäßes anliegen und dieses lagefixieren. Zum Ausgleich etwaiger Fertigungstoleranzen des ringförmigen Leuchtstofflampengefäßes, die sich auf die Haltbarkeit der Verbindung zwischen dem Lampengefäß und dem Gehäuse nachteilig auswirken könnten, sind an den jeweiligen Enden des ersten Gehäuseteils vorteilhaft elastische Stützelemente, wie z. B. an die Gehäuseschalen angeformte Stifte, Stege oder eine Ausfütterung vorgesehen.

Weiterhin sind in den Gehäuseschalen Befestigungselemente für die vorzugsweise aus elektronischen Bauelementen bestehende Vorschalt- und Zündvorrichtung vorgesehen.

Das Gehäuse ist mindestens an einem Teil der Oberfläche mit z. B. Querrillen oder ähnlichen Vertiefungen versehen, um die Griffigkeit der ringförmigen Leuchtstofflampe bei der Handhabung zu verbessern.

Der Sockel der ringförmigen Leuchtstofflampe ist am konzentrisch zu dem Leuchtstofflampengefäß angeordneten zweiten, verhältnismäßig kurz ausgebildeten Gehäuseteil befestigt. Hierdurch wird eine besonders gute Stabilität der Beleuchtungseinheit erreicht und die auf den Lampensockel und damit auf die Leuchtenfassung wirkenden Kräfte werden minimiert.

Die ringförmige Leuchtstofflampe gemäß der Erfindung ist kompakt und dank des diametrischen Gehäuseteils — auch mit nur einer Hand — leicht zu handhaben. Das Gehäuse mit seiner Doppelfunktion — es haltert das ringförmige Leuchtstofflampengefäß und enthält gleichzeitig die Vorschalt- und Zündvorrichtung — ist mit einfachen Mitteln an das Lampengefäß angepaßt. Die Vorschalt- und Zündvorrichtung ist für den Betrachter gewissermaßen « nicht vorhanden ». Da nur ein geringer Teil des Gehäuses über das Lampengefäß hinausragt, kann das emittierte Licht ungehindert abgestrahlt werden. Außerdem ist die Lampeneinheit leicht in vorhandene Leuchten einsetzbar. Die in das Gehäuse integrierte Vorschalt- und Zündvorrichtung und der Sockel ermöglichen den Einsatz der ringförmigen Leuchtstofflampe auch in einer für Glühlampen vorgesehenen Leuchte. Der nahe an der Lampenebene angeordnete Sockel sowie die spezielle Halterung des Lampengefäßes verleihen der Baueinheit eine hohe Stabilität.

Die Erfindung wird anhand der folgenden Figuren, die ein bevorzugtes Ausführungsbeispiel wiedergeben, näher erläutert.

Figur 1 stellt eine ringförmige Leuchtstofflampe gemäß der Erfindung in Seitenansicht dar.

Figur 2 zeigt die ringförmige Leuchtstofflampe der Figur 1 in der Draufsicht.

Figur 3 zeigt die obere Gehäuseschale in teilweise aufgebrochener Seitenansicht.

Figur 4 zeigt die obere Gehäuseschale in Ansicht von innen.

Figur 5 zeigt die untere Gehäuseschale im Halbschnitt.

Figur 6 zeigt die untere Gehäuseschale in Ansicht von innen.

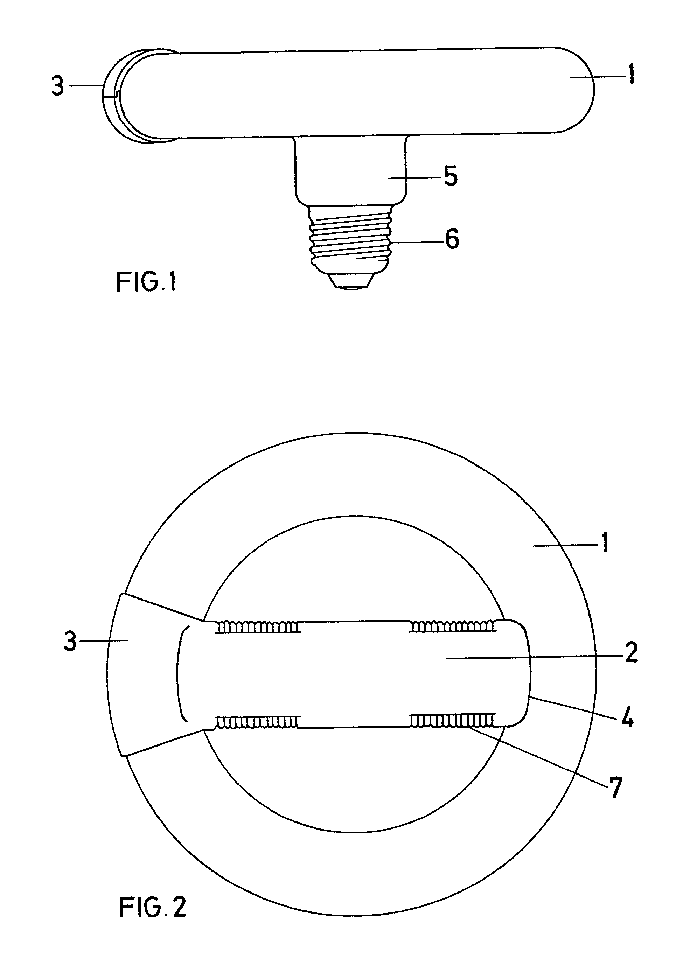

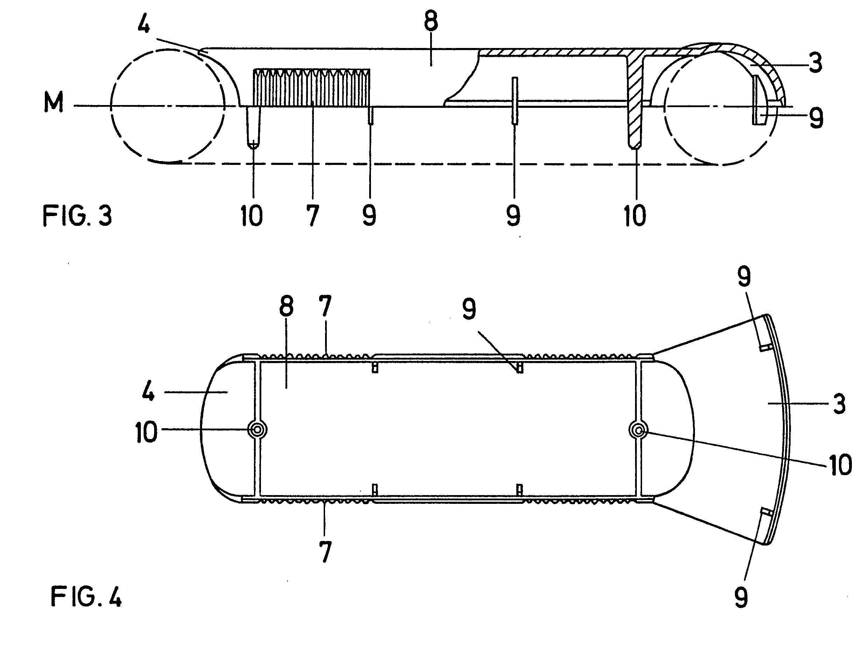

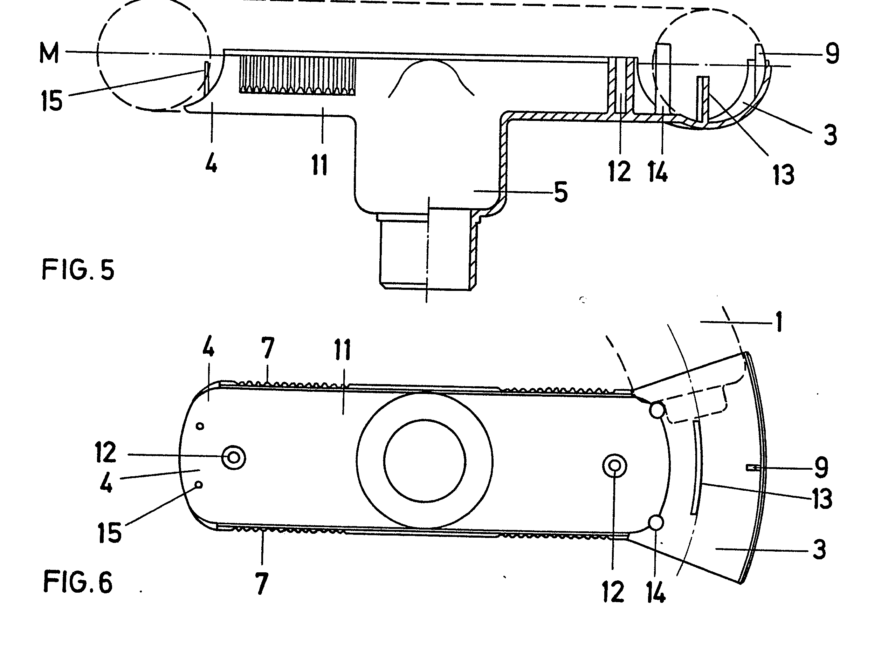

Die in der Figur 1 und 2 dargestellte kompakte ringförmige Leuchtstofflampe besteht im wesentlichen aus dem Lampengefäß 1 und dem diametrisch dazu angeordneten ersten Gehäuseteil 2. Ein Ende dieses Gehäuseteils 2 weist eine fächerartige Erweiterung 3 auf, die die Enden des Lampengefäßes 1 vollständig umfängt. Das andere Ende 4 des ersten Gehäuseteils 2 umfängt die den Enden des Lampengefäßes 1 gegenüberliegende Wand teilweise. An der Unterseite des ersten Gehäuseteils 2 ist konzentrisch zum Lampengefäß 1 ein zweiter, zylindrischer Gehäuseteil 5 angeformt, an dessen Ende ein Schraubsockel 6 befestigt ist, wie er gewöhnlich für Glühlampen verwendet wird. Der erste Gehäuseteil 2 ist in zwei Gehäuseschalen (Figuren 3 bis 6) aufgeteilt, wobei der zweite Gehäuseteil 5 nur an eine der Gehäuseschalen 11 (Figur 5 und 6) angeformt ist. Ein Teil der seitlichen Oberfläche des ersten Gehäuseteils 2 ist mit Querrillen 7 versehen, wodurch die Griffigkeit der Einheit beim Einsetzen in eine Leuchtenfassung erhöht wird. Innerhalb der Gehäuseteile 2 und 5 ist die für den Betrieb der ringförmigen Leuchtstofflampe erforderliche Vorschalt- und Zündvorrichtung angeordnet, die vorzugsweise aus elektronischen Bauelementen besteht.

In den Figuren 3 und 4 ist die obere Gehäuseschale 8 in unterschiedlichen Ansichten dargestellt. Das Lampengefäß 1 ist in der Figur 3 gestrichelt angedeutet. Innerhalb der oberen Gehäuseschale 8 sind in der Randzone in gewissen Abständen Lappen 9 angeformt, um eine formschlüssige Verbindung dieser oberen Gehäuseschale 8 mit der unteren Gehäuseschale 11 (Figuren 5 und 6) zu erreichen. Auf der Längsachse der oberen Gehäuseschale 8 sind nahe den jeweiligen Enden 3 und 4 in das Gehäuseinnere ragende, sich über die Mittellinie M hinaus erstreckende konische Stifte 10 angeformt, die zur unlösbaren Befestigung der oberen Gehäuseschale 8 mit der unteren Gehäuseschale 11 (Figuren 5 und 6) dienen. An einem Teil der seitlichen Oberfläche ist die obere Gehäuseschale 8 mit Querrillen 7 versehen.

Die Figuren 5 und 6 zeigen die untere Gehäuseschale 11 in unterschiedlichen Ansichten. In der Figur 5 ist das Lampengefäß 1 gestrichelt und in der Figur 6 ist ein Ende des Lampengefäßes 1 gestrichelt angedeutet. Innerhalb der fächerartigen Erweiterung 3 ist in der Randzone auf der Längsachse ein weiterer Lappen 9 für die formschlüssige Verbindung der beiden Gehäuseschalen 8 und 11 angeformt. Weiterhin sind — entsprechend den konischen Stiften 10 der oberen Gehäuseschale 8 — auf der Längsachse in das Gehäuseinnere ragende, sich etwa bis zur Mittellinie M erstreckende Buchsen 12 an die untere Gehäuseschale 11 angeformt. Die Verbindung der beiden Gehäuseschalen 8 und 11 miteinander erfolgt, indem die konischen Stifte 10 in die Buchsen 12 gepreßt werden, wodurch ein unlösbarer, sicherer Preßsitz entsteht. Die Lappen 9 gewährleisten ein sauberes, formschlüssiges Aneinanderstoßen der beiden Gehäuseschalen 8 und 11 in den sich berührenden Randzonen. Innerhalb der fächerartigen Erweiterung 3 der unteren Gehäuseschale 11 ist an der kreisförmig verlaufenden Mittellinie des Lampengefäßes 1 ein Abstandssteg 13 vorgesehen, der zwischen den Enden des Lampengefäßes 1 angeordnet ist. Am Auslauf der fächerförmigen Erweiterung 3 sind zwei in des Gehäuseinnere ragende, sich etwas über die Mittellinie M hinaus erstreckende, starre Stifte 14 vorgesehen, die das Lampengefäß 1 an seinen eingeschmolzenen Enden abstützen und lagefixieren. Am anderen Ende 4 der unteren Gehäuseschale 11 sind Stützelemente in Form von elastischen Stiften 15 vorgesehen, die etwaige Toleranzen des Lampengefäßes 1 ausgleichen und dieses zusätzlich lagefixieren. An die untere Gehäuseschale 11 ist konzentrisch zum Lampengefäß der zweite Gehäuseteil 5 mit zylindrischem Querschnitt angeformt, an dessen Ende eine Befestigungsmöglichkeit für einen Schraubsockel (siehe Figur 1) besteht. Ein Teil der seitlichen Oberfläche der unteren Gehäuseschale 11 ist — entsprechend der oberen Gehäuseschale 8 — mit Querrillen 7 versehen.

## Ansprüche

1. Ringförmige Leuchtstofflampe (1) mit integrierter Vorschalt- und Zündvorrichtung sowie einem Sockel (6) zum Anschluß an eine Versorgungsspannung, wobei die Vorschalt- und Zündvorrichtung in einem Gehäuse (2, 5) angeordnet ist, das sich innerhalb des von der Leuchtstofflampe gebildeten Raumes befindet, und der Sockel konzentrisch zu der Leuchtstofflampe an dem Gehäuse befestigt ist, dadurch gekennzeichnet, daß das Gehäuse aus zwei Gehäuseteilen (2, 5) besteht, von denen der erste Gehäuseteil (2) ein länglicher, sich diametrisch zum ringförmigen Leuchtstofflampengefäß (1) erstreckender Hohlkörper ist und der zweite Gehäuseteil (5) konzentrisch zum ringförmigen Leuchtstofflampengefäß (1) an den ersten Gehäuseteil (2) angeformt ist, und der erste Gehäuseteil (2) weiterhin aus zwei formschlüssig und unlösbar miteinander verbundenen Gehäuseschalen (8, 11) besteht, deren eine Enden (3) die Enden des rinförmigen Leuchtstofflampengefäßes (1) vollständig und deren andere Enden (4) die den Enden des Leuchtstofflampengefäßes (1) gegenüberliegende Gefäßwand mindestens teilweise umfangen.

2. Ringförmige Leuchtstofflampe nach Anspruch 1, dadurch gekennzeichnet, daß die Längsachse des ersten Gehäuseteils (2) auf der von der Querachse des ringförmigen Leuchtstofflampengefäßes (1) gebildeten Ebene liegt.

3. Ringförmige Leuchtstofflampe nach Anspruch 1 und 2, dadurch gekennzeichnet, daß die Höhe des ersten Gehäuseteils (2) etwa gleich dem Rohrdurchmesser des ringförmigen Leuchtstofflampengefäßes (1) ist.

4. Ringförmige Leuchtstofflampe nach Anspruch 1 bis 3, dadurch gekennzeichnet, daß die die Enden des ringförmigen Leuchtstofflampengefäßes (1) vollständig umfangenden einen Enden (3) des ersten Gehäuseteils (2) Elemente (13, 14) zur Lagefixierung des Leuchtstofflampengefäßes (1) aufweisen.

5. Ringförmige Leuchtstofflampe nach Anspruch 1 bis 4, dadurch gekennzeichnet, daß die jeweiligen, das ringförmige Leuchtstofflampengefäß (1) vollständig umfangenden bzw. teilweise umfangenden Enden (3, 4) des ersten Gehäuseteils (2) elastische Stützelemente (15) aufweisen, wodurch etwaige Fertigungstoleranzen des ringförmigen Leuchtstofflampengefäßes (1) ausgeglichen werden.

6. Ringförmige Leuchtstofflampe nach Anspruch 1 bis 5, dadurch gekennzeichnet, daß der erste Gehäuseteil (2) mindestens an einem Teil der Oberfläche mit Querrillen versehen ist.

## Claims

1. A circular fluorescent lamp (1) with an integrated ballast and starting device and a base (6) for connection to a supply voltage, with the ballast and starting device being arranged in a housing (2, 5) which is disposed within the space formed by the fluorescent lamp and with the base being affixed to the housing concentrically with the fluorescent lamp, wherein the housing consists of two housing parts (2, 5), of which the first housing part (2) is an elongate hollow body which extends diametrically with the circular fluorescent lamp envelope (1), and the second housing part (5) is integrally formed on the first housing part (2) concentrically with the circular fluorescent lamp envelope (1), and the first housing part (2) consists further of two form-locking and undetachably joined housing cups (8, 11) whose one ends (3) surround the ends of the circular fluorescent lamp envelope (1) completely and whose other ends (4) surround the envelope wall opposite the ends of the fluorescent lamp envelope (1) at least partially.

2. A circular fluorescent lamp as claimed in claim 1, wherein the longitudinal axis of the first housing part (2) lies in the plane formed by the transverse axis of the circular fluorescent lamp envelope (1).

3. A circular fluorescent lamp as claimed in claims 1 and 2, wherein the height of the first housing part (2) is approximately equal to the tube diameter of the circular fluorescent lamp envelope (1).

4. A circular fluorescent lamp as claimed in claims 1 to 3, wherein the ends (3) of the first housing part (2) which completely surround the ends of the circular fluorescent lamp envelope (1) are provided with elements (13, 14) for fixing the position of the fluorescent lamp envelope (1).

5. A circular fluorescent lamp as claimed in claims 1 to 4, wherein the respective ends (3, 4) of the first housing part (2) which surround the circular fluorescent lamp envelope (1) partially or completely are provided with elastic support elements (15) by which possible manufacturing tolerances of the circular fluorescent lamp envelope (1) are levelled out.

6. A circular fluorescent lamp as claimed in claims 1 to 5, wherein the first housing part (2) is provided with transverse grooves on at least a part of its surface.

## Revendications

1. Tube fluorescent de forme annulaire (1) comprenant un dispositif intégré ballast et d'allumage ainsi qu'une embase (6) pour le raccordement à une tension d'alimentation, le dispositif ballast et d'allumage étant disposé dans un boîtier (2, 5) qui se trouve à l'intérieur de l'espace formé par le tube fluorescent, et l'embase étant fixée au boîtier concentriquement par rapport au tube fluorescent, caractérisé en ce que le boîtier est constitué par deux parties de boîtier (2, 5) dont la première (2) est un corps creux allongé s'étendant diamétralement vers le récipient annulaire du tube fluorescent (1) et dont la deuxième partie (5) est formée sur la première partie de boîtier (2) concentriquement par rapport au récipient annulaire du tube fluorescent (1), et la première partie du boîtier (2) étant constituée en outre par deux coquilles de boîtier (8, 11) reliées l'une à l'autre par leur configuration et inamoviblement, les premières extrémités (3) des coquilles de boîtier entourant complètement les extrémités du récipient annulaire du tube fluorescent (1) et leurs autres extrémités (4) entourant au moins partiellement la paroi de récipient faisant face aux extrémités du récipient de tube fluorescent (1).

2. Tube fluorescent annulaire selon la revendication 1, caractérisé en ce que l'axe longitudinal de la première partie de boîtier (2) se trouve sur le plan formé par l'axe transversal du récipient de tube fluorescent annulaire (1).

3. Tube fluorescent annulaire selon la revendication 1 et la revendication 2, caractérisé en ce que la hauteur de la première partie de boîtier (2) est à peu près égale au diamètre de tube du récipient annulaire du tube fluorescent (1).

4. Tube fluorescent annulaire selon les revendications 1 à 3, caractérisé en ce que les premières extrémités (3) de la première partie de boîtier (2) entourant complètement les extrémités du récipient annulaire de tube fluorescent (1) présentent des éléments (13, 14) pour fixer la position du récipient du tube fluorescent (1).

5. Tube fluorescent annulaire selon les revendications 1 à 4, caractérisé en ce que les extrémités respectives (3, 4) entourant complètement ou entourant partiellement le récipient annulaire de tube fluorescent (1) et faisant partie de la première partie de boîtier (2) présentent des éléments d'appui élastiques (15) permettant de compenser toutes tolérances de fabrication du récipient annulaire de tube fluorescent (1).

6. Tube fluorescent annulaire selon les revendications 1 à 5, caractérisé en ce que la première partie de boîtier (2) est munie au moins sur une partie de la surface de sillons transversaux.

FIG.1

FIG.2

FIG. 3

FIG. 4

0 0 3 7 9 8 0

FIG. 5

FIG. 6

0 037 980